(19) Europäisches Patentamt
European Patent Office
Office européen des brevets

(11) EP 2 083 022 A1

(12) EUROPEAN PATENT APPLICATION
published in accordance with Art. 153(4) EPC

(43) Date of publication:
29.07.2009 Bulletin 2009/31

(21) Application number: 07831955.5

(22) Date of filing: 15.11.2007

(51) Int Cl.:
*C08F 8/46* (2006.01) *B32B 27/32* (2006.01)
*C08L 23/26* (2006.01)

(86) International application number:
PCT/JP2007/072225

(87) International publication number:
WO 2008/059938 (22.05.2008 Gazette 2008/21)

(84) Designated Contracting States:
AT BE BG CH CY CZ DE DK EE ES FI FR GB GR HU IE IS IT LI LT LU LV MC MT NL PL PT RO SE SI SK TR

(30) Priority: 17.11.2006 JP 2006312050

(71) Applicant: Mitsui Chemicals, Inc.
Tokyo 105-7117 (JP)

(72) Inventors:
- SOEDA, Yasuyuki
  Sodegaura-shi
  Chiba 299-0265 (JP)
- ONOGI, Takayuki
  Sodegaura-shi
  Chiba 299-0265 (JP)
- MORI, Akihide
  Sodegaura-shi
  Chiba 299-0265 (JP)
- OKAMOTO, Masahiko
  Sodegaura-shi
  Chiba 299-0265 (JP)
- KAGEYAMA, Fumio
  Ichihara-shi
  Chiba 299-0108 (JP)

(74) Representative: HOFFMANN EITLE
Patent- und Rechtsanwälte
Arabellastrasse 4
81925 München (DE)

# (54) METHOD FOR PRODUCING SYNDIOTACTIC PROPYLENE POLYMER

(57) Disclosed is a graft-modified syndiotactic propylene polymer having a high graft ratio. Also disclosed are a method for producing such a polymer, a resin composition containing such a polymer, and a laminate having at least one layer which contains the composition as an adhesive resin composition. Specifically disclosed is a graft-modified syndiotactic propylene polymer which is **characterized by** satisfying the following characteristics [1]-[3]. [1] The melt flow rate (MFR) measured at 230°C under a load of 2.16 kg is 30 -1000 (g/10 minutes). [2] The concentration of graft groups derived from a radically polymerizable unsaturated compound by $^{1}$H-NMR measurement is within the range of 0.7-7.0% by weight. [3] The syndiotactic pentad fraction determined by $^{13}$C-NMR measurement is not less than 0.80.

EP 2 083 022 A1

## Description

TECHNICAL FIELD OF THE INVENTION

The present invention relates to a graft modified syndiotactic propylene polymer, a process for producing the polymer, a thermoplastic resin composition containing the polymer and their uses. Specifically, it relates to a propylene copolymer obtainable by graft polymerizing a radical polymerizing unsaturated compound on a syndiotactic propylene homopolymer having a relatively high tacticity or a copolymer of propylene and a small amount of other olefins, and a process for producing the copolymer, and it also relates to their uses.

BACKGROUND OF THE INVENTION

As isotactic polypropylenes are low in price and have a relatively good balance in physical properties, they have various uses. Meanwhile, the existence of syndiotactic polypropylenes has been known. However, a known method of polymerizing at a low temperature in the presence of a catalyst comprising a vanadium compound, ether and an organoaluminum has low levels of syndiotacticity and it can be said that a resulting polypropylene has elastomeric properties. It is hard to say that the elastomeric properties properly represent the properties of syndiotactic polypropylenes.

Meanwhile, J.A. Ewen firstly discovered that a polypropylene having good tacticity, which has a syndiotactic pentad fraction of over 0.7, could be obtained in the presence of a catalyst comprising aluminoxane and a transition metal compound having an asymmetric ligand. (Non-Patent Document 1)

Although a copolymer of the syndiotactic polypropylene prepared in the above method or a propylene having a substantially syndiotactic structure and other olefins has relatively excellent physical properties, it has a problem such that since it is not compatible to other polymers having polar groups or metals, similar to isotactic polypropylenes, it is inferior in adhesion properties.

Graft modified isotactic polypropylenes prepared by grafting a monomer containing a carboxyl group such as maleic anhydride on an isotactic polypropylene are used for improving the adhesive properties to other polyolefins or coating properties. The preparation of the graft modified isotactic polypropylenes, however, has problems such that a obtained copolymer decreased largely in molecular weight by a simultaneous radical decomposition of polypropylene, which is a base polymer, or that it is difficult to separate the copolymer when it is prepared in a liquid phase.

As the improvement for the graft modified isotactic polypropylene, improvement of the thermal stability has been tried by grafting a dicarboxylic anhydride on a syndiotactic polypropylene and thereby making a dicarboxylic anhydride-modified syndiotactic polypropylene (Patent Document 1 and Patent Document 2). The improvement, however, is necessary to be further improved in order to apply the polypropylene industrially because the graft efficiency is low, the syndiotactic polypropylene used herein has a racemic diad fraction [r] of from 0.51 to 0.88 and has low stereoregularity which is insufficient for improving the thermal stability, and further the production process of the dicarboxylic anhydride modified syndiotactic polypropylene is restricted to a solution method of using a radical initiator in the presence of a solvent.

Moreover, an attempt of grafting a functional monomer to prepare a syndiotactic polypropylene has been conducted in order to graft a syndiotactic polypropylene in a molten state (Patent Document 3). However, the graft amount of the maleic anhydride used as a functional monomer is low, i.e. from 0.31% to 0.54%, and the great improvement in the capability as a binder with a polar resin cannot be found.

As the improvement for the graft amount to a polypropylene and regarding lowering of the molecular weight due to decomposition in the grafting, an attempt of grafting a unsaturated compound having radical character on a high stereoregularity-having syndiotactic polypropylene has been conducted (Patent Document 4). The syndiotactic polypropylene used has a rrrr fraction of 0.935, an intrinsic viscosity [η], as measured in a tetralin solution at 135°C, of 1.45, the graft amount of maleic anhydride with a solution method is 7.4 % by weight, a maleic anhydride modified syndiotactic polypropylene has an intrinsic viscosity of 1.28. In the graft, the graft amount and the lowering of the molecular weight can be improved.

In the graft reaction of the present invention, a radical polymerizing unsaturated compound in a larger amount as compared with conventional amounts can be grafted to a syndiotactic polypropylene by using a syndiotactic polypropylene having high stereoregularity as a base resin by means of a mixer and a kneader, which are generally used in the field of the thermoplastic resins. That is, since the high grafting can be carried out by utilizing existing equipments as they are without remodeling the equipments, it is very useful in the industrial world.

Patent Document 1: JP-A-H6(1994)-25364
Patent Document 2: JP-A-2003-238619
Patent Document 3: JP-A-2004-501250
Patent Document 4: JP-B-3025553
Non-Patent Document 1: J. Am. Chem. Soc., Vol. 110. 6255-6256 (1988)

Disclosure of the Invention

OBJECT OF THE INVENTION

It is an object of the invention to provide a graft-modified syndiotactic propylene polymer having a high graft ratio with maintaining the melt properties in a specific range.
It is another object of the invention to provide a process for efficiently producing a graft-modified syndiotactic propylene polymer having a high graft ratio with maintaining the melt properties in a specific range.
It is a further object of the invention to provide a resin composition comprising a graft-modified syndiotactic propylene polymer having thermal stability and a high graft ratio, and to provide a laminate comprising at least one layer which comprises the resin composition as an adhesive resin composition.

MEANS TO SOLVE THE PROBLEMS

The present inventors have been earnestly studied and found that the above objects can be solved by using the graft-modified syndiotactic propylene polymer satisfying all of the following properties [1] to [3].
[1] The melt flow rate (MFR), as measured at 230°C under a load of 2.16 Kg, is from 30 to 1000 g/10 min.
[2] The concentration of graft group caused from a radical polymerizing unsaturated compound, as measured in $^1$H-NMR, is from 0.7 to 7.0 % by weight.
[3] The syndiotactic pentad fraction, as measured in $^{13}$C-NMR is not less than 0.80.
The graft-modified syndiotactic propylene polymer is preferably obtainable by allowing a syndiotactic propylene polymer (A) having a syndiotactic pentad fraction of not less than 0.85 to thermally contact with a radical polymerizing unsaturated compound (B) at a temperature higher than the decomposing temperature of a radical initiator (C).
In the preferred embodiment of the present invention, the radical polymerizing unsaturated compound (B) is at least one selected from unsaturated dicarboxylic acids and their derivatives.
Furthermore, in the preferred embodiment of the present invention, the thermal contact is carried out by melt kneading. The resin composition (D), which comprises 0. 001 to 50 % by weight of the graft-modified syndiotactic propylene polymer (A), is useful as an adhesive agent. Preferred embodiment of the laminate (E) of the present invention comprises at least one layer of the resin composition (D).

EFFECT OF THE INVENTION

The graft-modified syndiotactic propylene polymer of the present invention has excellent thermal stability and attains a high graft ratio by not only a solution method but also a melting method. The resin composition (D) containing the graft-modified syndiotactic propylene polymer according to the present invention has excellent adhesion properties with polar resins even in a high temperature atmosphere. Using the resin composition (D), molded articles such as laminates having excellent interlaminar adhesivity at a high temperature atmosphere can be prepared.

BEST EMBODIMENT FOR CARRYING OUT THE INVENTION

The present invention is described in more detail hereinafter.

<Graft-modified syndiotactic propylene polymer>

The graft-modified syndiotactic propylene polymer of the present invention satisfies all of the following properties [1] to [3].
[1] The melt flow rate (MFR), as measured at 230°C under a load of 2.16 Kg, is from 30 to 1000 g/ 10 min.
[2] The concentration of graft group caused from a radical polymerizing unsaturated compound, as measured in $^1$H-NMR, is from 0.7 to 7.0 % by weight.
[3] The syndiotactic pentad fraction, as measured in $^{13}$C-NMR, is not less than 0.80.
Each requirement will be described below.

Requirement [1]

[1] The graft modified syndiotactic propylene polymer of the present invention has a melt flow rate (MFR), as measured at 230°C under a load of 2.16 Kg, of from 30 to 1000 g/10 min, preferably 50 to 900 g/10 min, further preferably 70 to 800 g/10 min, especially preferably 80 to 700 g/10 min. When the graft modified syndiotactic propylene polymer having a MFR of from 30 to 1000 g/10 min is used as a resin composition for the adhesive agent as described later, it

shows good adhesive strength not only at ordinary temperature but also at a high temperature, while a graft modified syndiotactic propylene polymer having a MFR unsatisfying the above range has inferior adhesion property. For example, as described in the examples of the present invention, MA-H-sPP-9 and MAH-sPP-10 which are each a modified product having a MFR of less than 30 (as described in Comparative Examples 9 and 10), and MAH-sPP-8 which is a modified product having a MFR of over 1000 g/10 min (as described in Comparative Example 8) have clearly lower adhesion strength at ordinary temperature and at a high temperature as compared with the adhesion strength of the modified products having a MFR of from 30 to 1000 g/10 min. Moreover, the graft modified syndiotactic propylene polymer having a MFR of from 30 to 1000 g/10 min has a merit such that existing equipment for modification of isotactic propylene polymers can be used without remodeling the equipment.

Requirement [2]

The graft modified syndiotactic propylene polymer of the present invention has a concentration of graft group caused from a radical polymerizing unsaturated compound, as measured in $^1$H-NMR, of from 0.7 to 7.0 % by weight, preferably 0.9 to 6.0 % by weight, more preferably 1.0 to 5.0 % by weight. When a graft modified syndiotactic propylene polymer having a graft group concentration of less than 0.7 % by weight is used as a resin composition, it is necessary to use a large amount of the graft modified syndiotactic propylene polymer in the resin composition in order to exhibit the effect of the graft groups. Therefore, the use thereof is inefficient from the economical viewpoint. Furthermore, when a graft modified syndiotactic propylene polymer having a graft group concentration of more than 7.0 % by weight is used as a resin composition component, a minor error in the weighing thereof occasionally influences the properties of a resulting resin composition greatly. Therefore, the use thereof could cause a trouble and is not preferable in quality control for resin compositions. Further, as described later, when the graft modified syndiotactic propylene polymer is prepared from a syndiotactic propylene polymer and an unsaturated compound (B) having radical polymerizing properties capable of giving a graft group, it is difficult to prepare a graft modified syndiotactic propylene polymer having a graft group concentration of over 7.0 % by weight by the melt kneading method suitable for a large scale production. The preparation thereof is limited on the solution modification method, which is generally employed in production on a small scale. Therefore, the preparation from the syndiotactic propylene polymer and the unsaturated compound (B) is not preferable.

Requirement [3]

The graft modified syndiotactic propylene polymer of the present invention has a syndiotactic pentad fraction, as measured in $^{13}$C-NMR of not less than 0.80, preferably not less than 0.85, further preferably not less than 0.90. Although the upper limit of the rrrr fraction is not particularly defined, it is generally not more than 1 and normally not more than 0.99. It is not preferred to use a graft modified syndiotactic propylene polymer having a syndiotactic pentad fraction of less than 0.80 for a molded article because various useful properties caused by the syndiotactic stereoregularity as a polypropylene, for example, molding properties, heat resistance, transparency and crystallinity cannot be occasionally exhibited sufficiently.

<Preferred Embodiment of Graft modified syndiotactic propylene polymer>

The graft modified syndiotactic propylene polymer of the present invention is obtainable by allowing the syndiotactic propylene polymer (A) having a syndiotactic pentad fraction of at least 0.85 to contact thermally with the radical polymerizing unsaturated compound (B) at a temperature not lower than the decomposing temperature of the radical initiator (C). In the claims of the present invention, the above production process, namely the modification process is not claimed, but the present invention includes such a production process (modification process).

Hereinafter, the preferred embodiment of the graft modified syndiotactic propylene polymer of the present invention will be described from the viewpoint of the production process of the graft modified syndiotactic propylene polymer.

Each starting material component for producing the graft modified syndiotactic propylene polymer is described below.

Syndiotactic propylene polymer (A)

The syndiotactic propylene polymer (A) of the present invention is a homopolypropylene or a propylene/$\alpha$-olefin random copolymer. The propylene/$\alpha$-olefin random copolymer comprises at least 90 % by mol of a constituting unit derived from propylene and not more than 10 % by mol of a constituting unit derived from an $\alpha$-olefin having 2 to 20 carbon atoms excluding propylene, preferably 93 to 99.9 % by mol of a constituting unit derived from propylene and 0.1

to 7 % by mol of a constituting unit derived from an α-olefin having 2 to 20 carbon atoms excluding propylene, further preferably 94 to 99.9 % by mol of a constituting unit derived from propylene and 0.1 to 6 % by mol of a constituting unit derived from an α-olefin having 2 to 20 carbon atoms excluding propylene.

Examples of the α-olefin having 2 to 20 carbon atoms excluding propylene are ethylene, 1-butene, 3-methyl-1-butene, 1-pentene, 1-hexene, 4-methyl-1-pentene, 1-octene, 1-decene, 1-dodecene, 1-tetradecene, 1-hexadecene, 1-octadecene and 1-eicosene.

The syndiotactic propylene polymer (A) of the present invention has an intrinsic viscosity [η], as measured in decalin at 135°C, usually from 0.01 to 10.00 dl/g, preferably 0.10 to 9.00 dl/g, more preferably 0.50 to 8.00 dl/g, furthermore preferably 0.95 to 8.00 dl/g, particularly preferably 1.00 to 8. 00 dl/g, especially preferably 1.40 to 8.00 dl/g. Among them, it is preferred to use the syndiotactic propylene polymer (A) having an intrinsic viscosity of from 1.40 to 5.00 dl/g as a starting material for the resin composition. When the intrinsic viscosity [η] is less than 0.01 dl/g, the strength of the graft modified syndiotactic propylene polymer after graft modification is lowered, while when it is over 10.00 dl/g, it is difficult to prepare a modified product occasionally because the viscosity is too high, therefore this case is not preferable.

The syndiotactic propylene polymer (A) used in the present invention satisfies all the following characteristics [i] to [iii] in addition to the above properties.

[i] The syndiotactic pentad fraction (rrrr fraction) as measured by $^{13}$C-NMR is at least 0.85.

[ii] The melting point (Tm) as measured by a differential scanning calorimeter (hereinafter referred to DSC) is not lower than 145°C and the heat of fusion (ΔH) is not less than 40 mJ/mg.

[iii] The isothermal crystallization temperature $T_{ISO}$ as measured in a differential scanning calorimeter and the crystallizing half time $t_{1/2}$ at the isothermal crystallization temperature $T_{ISO}$ satisfy the following formula (1) in the range of $110 \leq T_{ISO} \leq 150$°C.

$$1.67 \times 10^{-4}\exp(0.10 \times T_{Iso}) \leq t_{1/2} \leq 5.56 \times 10^{-4}\exp(0.12 \times T_{Iso}) \quad (1)$$

The syndiotactic propylene polymer (A) of the present invention preferably satisfies the following property [iv] in addition to the above requirements. [iv] The amount of a soluble in n-decane is not more than 1 % by weight.

The requirements [i] to [iii] are described in detail below.

Requirement [i]

The syndiotactic propylene polymer of the present invention has a syndiotactic pentad fraction (rrrr fraction, pentad syndiotacticity) as measured by an NMR method of at least 0.85, preferably at least 0.90, more preferably at least 0.936, furthermore preferably at least 0.95. The graft modified product formed from the syndiotactic propylene polymer having a rrrr fraction in the above range has excellent moldability, heat resistance and transparency, and good crystalline properties as a polypropylene. Further, when the graft modified product is used as a compatibilizing agent, a filler modifying agent and a resin composition for adhesive, it exhibits excellent properties. The upper limit of the rrrr fraction is not defined particularly. The rrrr fraction is generally not more than 1, normally not more than 0.99.

The syndiotactic pentad fraction (rrrr fraction) is measured in the following manner. The rrrr fraction of the graft modified syndiotactic propylene polymer as described above is also measured in the same manner.

The rrrr fraction is determined by the following formula (2) using Prrrr (absorption intensity derived from a methyl group in the third unit at the position where five propylene units are continuously syndiotactic-linked) and Pw absorption intensity (absorption intensity derived from all of the methyl groups in the propylene units) in $^{13}$C-NMR spectrum.

$$\text{rrrr Fraction} = \text{Prrrr} / \text{Pw} \quad \ldots (2)$$

The NMR measurement is carried out, for example, in the following manner. That is, 0.35 g of a sample is dissolved with heat in 2.0 ml of hexachlorobutadiene. After the solution is filtered off using a glass filter (G2), 0.5 ml of benzene deuteride is added to the solution and then fed into an NMR tube having an inner diameter of 10 mm. Thereafter, $^{13}$C-NMR measurement on the solution is carried out at 120°C using an NMR measuring apparatus GX-500 model manufactured by Nippon Denshi Co., Ltd. The integrating number is at least 10,000 times. The syndiotactic

propylene polymer having a rrrr fraction in this range can be produced using the catalyst system as described later by determining the polymerization conditions as described later.

Requirement [ii]

The syndiotactic propylene polymer has a melting point (Tm), as measured by a differential scanning calorimeter (DSC), of not lower than 145°C, preferably not lower than 150°C, further preferably not lower than 155°C, furthermore preferably not lower than 156°C. The syndiotactic propylene polymer has a heat of fusion (ΔH), which is determined at the same time, of not less than 40 mJ/mg, preferably not less than 50 mJ/mg, and further preferably not less than 52 mJ/mg.
The differential scanning calorimeter is carried out, for example, in the following manner. About 5 mg of a sample is packed in a special aluminum pan and using DSC PYRIS1 or DSC7 manufactured by Perkin Elmer Co., Ltd., the temperature of the pan is elevated from 30°C to 200°C at a rate of 320°/min and is kept at 200°C for 5 min. Thereafter, the temperature is decreased from 200°C to 30°C at a rate of 10°C/min and is kept at 30°C for 5 min. Then, when the temperature is elevated at a rate of 10°C/min, the melting point (Tm) is determined from the endothermic curve. In the DSC measurement, when plural peaks are detected, the peak detected in the highest temperature side is defined as a melting point (Tm).
The graft modified syndiotactic propylene polymer prepared by graft-modifying the syndiotactic propylene polymer having a melting point in this range has excellent moldability, heat resistance and mechanical properties, and also has good crystalline properties as a polypropylene. When the graft-modified syndiotactic propylene polymer is used as a compatibilizing agent, a filler modifying agent and a resin composition for adhesive, it exhibits excellent properties.
The syndiotactic propylene polymer having a melting point in this range can be produced using the catalyst system as described later by determining the polymerization conditions as described later.

Requirement [iii]

The syndiotactic propylene polymer (A) satisfies the following formula (1) when the isothermal crystallization temperature as measured in a differential scanning calorimeter is taken as $T_{ISO}$ and the crystallizing half time at the isothermal crystallization temperature $T_{ISO}$ is taken as $t_{1/2}$ in the range of $110 \leq T_{ISO} \leq 150°C$.
$$1.67 \times 10^{-4} \exp(0.10 \times T_{ISO}) \leq t_{1/2} \leq 5.56 \times 10^{-4} \exp(0.12 \times T_{ISO}) \quad (1)$$

The syndiotactic propylene polymer (A) preferably satisfies the following formula (3).
$$1.67 \times 10^{-4} \exp(0.10 \times T_{ISO}) \leq t_{1/2} \leq 3.71 \times 10^{-4} \exp(0.12 \times T_{ISO}) \quad (3)$$

It more preferably satisfies the following formula (4).
$$1.67 \times 10^{-4} \exp(0.10 \times T_{ISO}) \leq t_{1/2} \leq 2.23 \times 10^{-4} \exp(0.12 \times T_{ISO}) \quad (4)$$

The crystallization half time ($t_{1/2}$) as determined by isothermal crystallization measurement is the time that the heat quantity reaches to 50%, the area between the DSC heat quantity curve and the base line is the total quantity of heat in the course of isothermal crystallization.

[Referred to "New polymer experiment lecture 8 Physical properties of Polymers" published in Kyoritsu Shupan Co.,Ltd]

The measurement of the crystallization half time ($t_{1/2}$) is carried out in the following manner. About 5 MG of a sample is packed in a special aluminum pan and using DSCPYRIS1 or DSC7 manufactured by Perkin Elmar Co., Ltd., the temperature is elevated from 30°C to 200° at a rate of 320°C/min and maintained at 200°C for 5 min. Then, the temperature is decreased from 200°C to each isothermal crystallization temperature at a rate of 320°C/min, and the

crystallization half time is determined from the DSC curve, which is obtained while maintaining the isothermal crystallization temperature. In the measurement, the crystallization half time ($t_{1/2}$) is determined by setting the time of starting the isothermal crystallization process to "t=0", (the time of reaching of the temperature to the isothermal crystallization temperature from 200°C). With regard to the syndiotactic propylene polymer of the present invention, the crystallization half time ($t_{1/2}$) can be determined in the above manner, but when some polymers do not crystallize at a certain isothermal crystallization temperature, for example, at 110°C, the measurement is expediently carried out at an isothermal crystallization temperature not higher than 110°C at several points and the crystallization half time ($t_{1/2}$) is determined by the extrapolation value thereof.

The syndiotactic propylene polymer satisfying the requirement [iii] has remarkably more excellent moldability as compared with known ones. The excellent moldability means the property such that when graft modification is carried out, the time during the polymer is solidified from a solution state, a slurry state or a molten state is short. The syndiotactic propylene polymer, moreover, has excellent modification rate, form stability and productivity for a long time.

Using the catalyst system as described later and determining the polymerization conditions as described later, it is possible to produce the syndiotactic propylene polymer satisfying the requirement [iii].

The syndiotactic propylene polymer (A) of the present invention preferably satisfies the following requirement [iv] simultaneously in addition to the requirements [i] to [iii].

Requirement [iv]

The syndiotactic propylene polymer (A) has an amount of a soluble in n-decane of not more than 1 % by weight, preferably not more than 0. 8 % by weight, more preferably not more than 0.6% by weight. The small amount of a soluble in n-decane usually means the fact that the amount of low crystalline components is small. Namely, the graft modified syndiotactic propylene polymer obtainable by graft modifying the syndiotactic propylene polymer also satisfying the requirement [iv] has good adhesion and heat resistance.

Production process for Syndiotactic propylene polymer (A)

In the production process of the syndiotactic propylene polymer (A) according to the present invention, it is preferred to use a polymerization catalyst, which comprises: (K) a crosslinking metallocene compound represented by the following formula [1], and
(M) at least one compound selected from;
(m-1) an organoaluminum oxy compound,
(m-2) a compound forming an ion pair by reaction with the crosslinking metallocene compound (K) and
(m-3) an organoaluminum compound.
The catalyst should not be limited as long as the resulting polymer satisfies the requirements [i] to [iii].

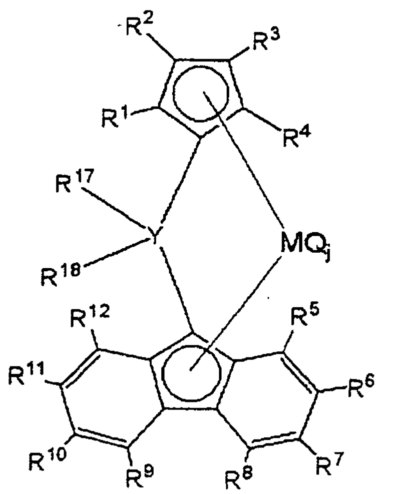

····[1]

In the formula [1], $R^1$, $R^2$, $R^3$ and $R^4$ are each selected from hydrogen, a hydrocarbon group and a silicon-containing group, $R^2$ and $R^3$ may be bonded to form a ring, $R^5$, $R^6$, $R^8$, $R^9$, $R^{11}$ and $R^{12}$ are each selected from hydrogen,

a hydrocarbon group and a silicon-containing group, two groups of $R^7$ and $R^{10}$ may be identical or different each other and are selected from a hydrocarbon group and a silicon-containing group, and not hydrogen. The adjacent groups of at least one pair selected from $R^5$ and $R^6$, $R^7$ and $R^8$, $R^8$ and $R^9$, $R^9$ and $R^{10}$, and $R^{11}$ and $R^{12}$ may be bonded each other to form a ring. $R^{17}$ and $R^{18}$ may be identically or differently hydrogen, a hydrocarbon group having 1 to 20 carbon atom(s) or a silicon-containing group and substituent groups may be bonded each other to form a ring. M is Ti, Zr or Hf, Y is carbon, One or more Q is selected from a halogen, a hydrocarbon group, an anion ligand and a neutral ligand capable of being coordinated in a lone electron pair and the plural Qs may be identical different, and j is an integer of 1 to 4.

It is preferred to use the crosslinking metallocene compound of the formula [1] where $R^6$ and $R^{11}$ each are an aryl group such as phenyl, tolyl, t-butylphenyl, dimethylphenyl, trimethylphenyl or biphenyl, or a substituted aryl group, because of capable of preparing a syndiotactic propylene polymer having a high melting point.

The crosslinking metallocene compound (K) can be prepared by a known method and the method is not particularly limited. Examples of the known production method may include a method for production as described in WO2001/27124 and WO2004-087775 filed by the present applicant. Furthermore, such a metallocene compound may be used singly or two or more thereof may be combined for use.

The compound (M) used as the polymerization catalyst components of the present invention comprise
(m-1) an organoaluminum oxy compound,
(m-2) a compound forming an ion pair by reaction with the crosslinking metallocene compound (K) and
(m-3) an organoaluminum compound, and further may comprise (N) a particulate carrier. Each component is described in detail below.

(m-1) Organoaluminum oxy compound

As the organoaluminum oxy compound (m-1) used in the present invention, it is possible to use a known aluminoxane as it is. Examples thereof are compounds represented by the following formula (2)

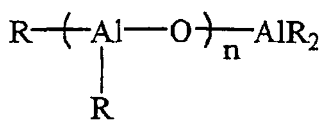

···[2]

and/or the formula [3]

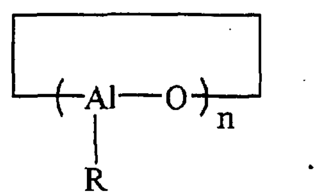

····[3]

In the formulas [2] and [3], R is a hydrocarbon group having 1 to 10 carbon atom(s), and n is an integer of two or more. Particularly, methyl aluminoxanes in which R is a methyl group, and n is 3 or more, preferably 10 or more are used. These aluminoxanes may include some amounts of organoaluminum compounds.

The organoaluminum oxy compound used in the present invention may include a modified methyl aluminoxanes represented by the following formula [4].

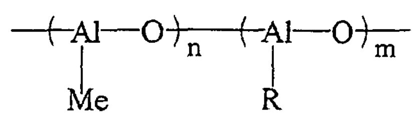

······[4]

In the formula [4], R is a hydrocarbon group having 1 to 10 carbon atom(s) and m and n are each an integer

of 2 or more.

The modified methyl aluminoxanes are prepared by using trimethylaluminum and alkyl aluminums except for trimethylaluminum. The compounds [4] are generally referred to MMAO. The MMAO can be prepared by a method as disclosed in US4960878 or commercially available one can be used as it is.

(m-2) Compound forming an ion pair by reaction with the crosslinking metallocene compound (K)

Examples of the compound (m-2) forming an ion pair by reaction with the crosslinking metallocene compound (K) (hereinafter sometimes referred to "ionic compound") may include Lewis acid, an inonic compound, a borane compound and a carborane compound, as described in JP-A-H1 (1989)-501950 or US5321106, and further may include a heteropoly compound and an isopoly compound.

(m-3) Organoaluminum compound

Examples of (m-3) the organoaluminum compound for forming the olefin polymerization catalyst may include organoaluminum compounds represented by the following formula [5].

$$R^a_m Al (OR^b)_n H_p X_q \qquad [5]$$

In the formula, $R^a$ and $R^b$ may be identical or different each other, and each are a hydrocarbon group having 1 to 15 carbon atom(s), preferably 1 to 4 carbon atom(s), X is a halogen atom, and m, n, p and q satisfy the following relations $0<m\leq3$, $0\leq n<3$, $0\leq p<3$, $0\leq q<3$, and $m+n+p+q=3$.

It is preferred to use trimethyl aluminum and triisobutyl aluminum as the organoaluminum compound (m-3) from the viewpoint of availability.

The olefin polymerization catalyst of the present invention, further, may optionally include, as a catalyst component, a carrier (N) together with (K) the crosslinking metallocene compound represented by the formula [1], and (M) at least one compound selected from (m-1) the organoaluminum oxy compound, (m-2) the compound forming an ion pair by reaction with the crosslinking metallocene compound (K) and (m-3) the organoaluminum compound.

(N) Carrier

The carrier (N) used in the present invention is an inorganic or organic compound and a granular or fine particulate solid. Preferable examples of the inorganic compound are a porous oxide, an inorganic chloride, clay, clay mineral and an ion exchangeable layer compound.

Specific examples of the porous oxide to be used are $SiO_2$, $Al_2O_2$, MgO, ZrO, $TiO_2$, $B_2O_3$, CaO, ZnO, BaO and $ThO_2$, and further, a composite or a mixture thereof, such as natural or synthetic zeolites, $SiO_2$-MgO, $SiO_2$-$Al_2O_3$, $SiO_2$-$TiO_2$, $SiO_2$-$V_2O_5$, $SiO_2$-$Cr_2O_3$ and $SiO_2$-$TiO_2$-MgO. Of these, porous oxides essentially containing $SiO_2$ and/or $Al_2O_3$ are preferred.

As the inorganic chloride, $MgCl_2$, $MgBr_2$, $MnCl_2$ and $MnBr_2$ are used. The inorganic chloride may be used as it is or may be pulverized by a ball mill or vibrating mill and then submitted to use. Moreover, the inorganic chloride may be dissolved in a solvent such as alcohol, deposited into fine particles with a precipitation agent and then submitted to use.

The clay used in the present invention generally comprises a clay mineral as a main component. The ion exchangeable layer compound used in the present invention is a compound having a crystal structure such that the surfaces formed by ion bonds are in parallel piled with weak bonding force each other and the ions contained in the compound are exchangeable. Almost all of the clay minerals are ion exchangeable layer compounds. As the clays, clay minerals and ion exchangeable layer compounds, not only natural ones but also artificially synthesized ones can be used. Further examples of the clays, clay minerals and ion exchangeable layer compounds may include clays, clay minerals and ion crystalline compounds having a layer crystalline structure of hexagonal closest packing type, antimony type, $CdCl_2$ type or $CdI_2$ type.

The ion exchangeable layer compounds used in the present invention may be layer compounds in a state such that interlaminar spaces are enlarged, which compounds are prepared by exchanging interlaminar exchangeable ions with other bulky ions utilizing ion exchangeable property. Preferable examples are clays or clay minerals, and particularly preferable examples are montmorillonite, vermiculite, pectolite, teniolite and synthetic mica.

As the organic compounds, granular or fine particulate solids having a particle diameter of from 10 to 300 $\mu$m are mentioned. Examples thereof are (co)polymers which essentially comprise an $\alpha$-olefin having 2 to 14 carbon atoms such as ethylene, propylene, 1-butene or 4-methyl-1-pentene, (co)polymers which essentially comprise vinylcyclohexane or styrene, and modified products thereof.

The polymerization catalyst of the present invention may include alcohols, phenolic compounds, carboxylic acids, phosphorus compounds and organic compounds such as sulfonate or the like, as a catalyst component, according

to necessity.

In the polymerization, the method for using each component and the addition order are arbitrarily selected. For example, the following methods are illustrated.

(1) A method for adding the component (K) singly to a polymerization vessel.
(2) A method for adding the component (K) and the component (M) in an arbitrary order to a polymerization vessel.
(3) A method of adding a catalyst component in which the component (K) is supported on the carrier (N), and the component (M) in an arbitrary order to a polymerization vessel.
(4) A method of adding a catalyst component in which the component (M) is supported on the carrier (N), and the component (K) in an arbitrary order to a polymerization vessel.
(5) A method of adding a catalyst component in which the component (K) and the component (M) are supported on the carrier (N) to a polymerization vessel.

In the methods (2) to (5), at least two of the catalyst components may be contacted previously.

In each of the methods (4) and (5) wherein the component (M) is supported, other component (M) not supported may be optionally added in an arbitrary order. In the method, both of the components (M) may be the same or different.

Moreover, in the solid catalyst component in which the component (K) is supported on the component (N) or the solid catalyst component in which the component (K) and the component (M) are supported on the component (N), an olefin may be prepolymerized, and further a catalyst component may be supported on the solid catalyst component prepolymerized.

The polymerization of the present invention may be carried out by a liquid phase polymerization such as solution polymerization or suspension polymerization, or a gas phase polymerization. In the present invention, the liquid phase polymerization method is preferable, and further the solution polymerization method is particularly preferable. Specific examples of an inert hydrocarbon solvent used in the liquid phase polymerization method are aliphatic hydrocarbons such as propane, butane, pentane, hexane, heptane, octane, decane, dodecene and kerosene; alicyclic hydrocarbons such as cyclopentane, cyclohexane and methyl cyclopentane; aromatic hydrocarbons such as benzene, toluene and xylene; halogenated hydrocarbons such as ethylene chloride, chlorobenzene and dichloromethane; and mixtures thereof. The olefin itself can be used as a solvent.

When the olefin polymerization is carried out using the olefin polymerization catalyst as described above, the component (K) is used in an amount that becomes usually from $10^{-9}$ to $10^{-1}$ mol, preferably $10^{-8}$ to $10^{-2}$ mol per 1 liter of reaction volume.

The component (m-1) is used in an amount such that the molar ratio of component (m-1) to all transition metal atoms in the component (K) becomes usually from 0.01 to 5000, preferably 0.05 to 2000. The component (m-2) is used in an amount such that the molar ratio of component (m-2) to all transition metal atoms in the component (K) becomes usually from 1 to 10, preferably 1 to 5. The component (m-3) is used in an amount such that the molar ratio of aluminum atoms in the component (m-3) to all transition metal atoms in the component (K) becomes usually from 10 to 5000, preferably 20 to 2000.

In the olefin polymerization using the olefin polymerization catalyst described above, the polymerization temperature is usually from -50°C to +200°C, preferably 0 to 170°C. The polymerization pressure is generally from ordinary pressure to 10 MPa gauge pressure, preferably ordinary pressure to 5 MPa gauge pressure. The polymerization reaction can be carried out in any of batch-wise, semi-continuous and continuous methods. The polymerization reaction, moreover, may be carried out in two or more steps, which are different in reaction conditions each other. The molecular weight of the resulting olefin polymer can be regulated by adding hydrogen in the polymerization system or changing the polymerization temperature. The molecular weight, furthermore, can be regulated by the amount of the component (M) used herein. When hydrogen is added, the hydrogen amount is preferably about from 0.001 to 100 NL per 1 Kg of the olefin.

Production process for Graft modified syndiotactic propylene polymer

The production process for graft modified syndiotactic propylene polymer by modification of the syndiotactic propylene polymer (A) as described above is described below.

The graft modified syndiotactic propylene polymer of the present invention is obtainable by allowing the syndiotactic propylene polymer (A) to contact under heating with the radical polymerizing unsaturated compound (B) at a temperature higher than the decomposing temperature of the radical initiator (C). As the process for contacting under heating, there can be given a solution process using a large amount of a solvent and a process for melt kneading in the absence of a solvent or using a small amount of a solvent.

The component (B) and the component (C) are described below.

<Radical polymerizing unsaturated compound (B)>

Examples of the radical polymerizing unsaturated compound (B) may include a hydroxyl group-containing ethylene unsaturated compound, an amino group-containing ethylene unsaturated compound, an epoxy group-containing ethylene unsaturated compound, an aromatic vinyl compound, an unsaturated carboxylic acid or its derivatives, a vinyl ester compound, a vinyl chloride, and a carbodiimide compound. Particularly, the unsaturated carboxylic acid and its derivatives are preferred as the radical polymerizing unsaturated compound (B). Examples of the unsaturated carboxylic acid and its derivatives may include an unsaturated compound having at least one carboxylic acid group, an ester of a compound having a carboxylic acid group and an alkyl alcohol, and an unsaturated compound having at least one carboxylic anhydride. Examples of the unsaturated group are vinyl group, vinylene group and unsaturated cyclic hydrocarbon group.

Specific examples of the compound are unsaturated carboxylic acids such as acrylic acid, methacrylic acid, maleic acid, fumaric acid, tetrahydrophthalic acid, itaconic acid, citraconic acid, crotonic acid, isocrotonic acid, and Nadic acid™ (endocis-bicyclo[2.2.1]hepto-5-ene-2,3-dicarboxylic acid) ; or their derivatives such as acid halides, amides, imides, anhydrides, and esters. Specific examples of the derivatives are malenyl chloride, maleimide, maleic anhydride, citraconic anhydride, 2-methyl maleic anhydride, 2-chloromaleic anhydride, 2,3-dimethyl maleic anhydride, 4-methyl-4-cyclohexene-1,2-dicarboxylic acid anhydride monomethyl maleate, dimethyl maleate, glycidyl maleate, methyl acrylate, ethyl acrylate, butyl acrylate, methyl methacrylate, ethyl methacrylate and butyl methacrylate.

These unsaturated carboxylic acid and/or their derivatives may be used singly or two or more may be combined for use. Of these, the unsaturated dicarboxylic acids and anhydrides thereof are preferred. Particularly, it is preferred to use maleic acid, Nadic acid and their acid anhydrides.

Examples of the hydrolysable unsaturated silane are a compound having a radical polymerizing unsaturated group and an alkoxysilyl group or a silyl group in the molecule, a compound having a hydrolyzable silyl group bonded with a vinyl group or an alkylene group, and a compound having a hydrolyzable silyl group bonded with an ester amide such as acrylic acid or methacrylic acid. Specific examples thereof are vinyltrichloro silane, vinyltris(β-methoxyethoxy) silane, vinyltriethoxy silane, vinyltrimethoxy silane, γ-methacryloxy propyl trimethoxy silane, monovinyl silane, and monoallyl silane.

Examples of the unsaturated halogenated hydrocarbons are vinyl chloride and vinylidene chloride.

<Radical initiator (C)>

It is possible to use an organic peroxide or an azo compound as the radical initiator (C). In the production process of the present invention, the organic peroxide is preferred. Examples of the organic peroxide are organic peroxides, which are compounds generally used in graft polymerizing to a polyolefin, and specific examples are benzoyl peroxide, methylethylketone peroxide, cyclohexanone peroxide, t-butyl peroxy isopropyl carbonate, di-t-butyl perphthalate, 2,5-dimethyl-2,5-di(t-butylperoxy)hexane, 2,5-dimethyl-2,5-bis(t-butylperoxy)hexene-3, di-t-butyl peroxide, t-butylperoxybenzoate, 2,5-dimethyl-2,5-di(benzoylperoxy)hexane, cumene hydroperoxide, t-butyl hydroperoxide, t-butylperoxy benzoate, dilauryl peroxide and dicumyl peroxide.

The radical initiator (C) may be mixed as it is with the syndiotactic propylene polymer (A), which will be modified, and the radical polymerizing unsaturated compound (B) for use, or the radical initiator (C) may be dissolved in a small amount of an organic solvent and then submitted to use. As the organic solvent, organic solvents capable of dissolving the radical initiator can be used without particular limitation, and examples thereof are acetone and the like.

In graft-polymerizing the radical polymerizing unsaturated compound (B) on the syndiotactic propylene polymer (A), which will be modified, a reducing substance may be used. The use of the reducing substance can improve the graft amount of the radical polymerizing unsaturated compound (B). The graft modification of the syndiotactic propylene polymer (A), which will be modified with the radical polymerizing unsaturated compound (B), can be carried out by a conventionally known method.

For example, the syndiotactic propylene polymer (A) is dissolved in the organic solvent, and then the radical polymerizing unsaturated compound (B) and the radical initiator (C) are added to the solution, and reacted at a temperature of from 70 to 200°C, preferably 80 to 190°C, for 0.5 hr to 15 hrs, preferably 1 hr to 10 hrs. The conditions used in conventional isotactic propylenes can be applied to the amount of the unsaturated compound used herein without particular limitations. The amount of the unsaturated compound used is small because the copolymerization efficiency is relatively good. The usual amount of the unsaturated compound used is preferably from 0.001 to 5 parts by weight based on 100 parts by weight of the syndiotactic propylene polymer (A). The radical initiator (C) is preferably used in such an amount that the amount ratio of the radical initiator (C) to the unsaturated compound is from 0.00001 to 2.

Moreover, there can be described a method of melt kneading the components, for example, (A) and (B), and further resins which are optionally added in such an amount that the amounts of the unsaturated carboxylic acid and the like in the composition are in the above range, altogether or sequentially. For carrying out the graft polymerization,

there are a method of carrying out graft polymerization in the presence of the components (A) and (B) simultaneously, and a method of graft modifying a part of the components (A) and (B), and then melt-kneading the resulting graft modified product with the un-modified resins, thereby preparing the modified polyolefin composition. The preferred method comprises graft-modifying a part or full of the component (B) and then melt-kneading the unmodified components. Examples of the melt-kneading method may include methods of melt kneading by mono-axial or two-axial screw-extruding machines, Banbury mixer, roll, various kneaders, after the resin compositions are dry-blended. It is preferred industrially to use extruding machines. The graft modification with the melt kneading is preferable because the production cost is lower than that of graft modification using the organic solvent.

Since the syndiotactic propylene polymer (A) has a higher melt viscosity and a smaller degradation of the viscosity as compared with conventional isotactic polypropylenes, strands output from an extruder are hardly sagged and unintended breaks of the strands are hardly caused. Therefore, the melt extrusion graft modification of the syndiotactic propylene polymer (A) is easily carried out. Consequently, the production of the graft modified syndiotactic polypropylene is preferably carried out by the melt modification with an extruder. This reaction is carried out usually at a temperature higher than the melting point of a substance to be modified. Specifically, it is desired to modify the syndiotactic propylene polymer (A) at a temperature of from 130 to 300° C, preferably 180 to 250°C for a usual period of time from 0.5 min to 10 min. The conditions of conventional isotactic polypropylenes can be applied to the proportion of the unsaturated compound used herein without particular limitations. Since the graft efficiency is relatively good, the amount of the unsaturated compound used is small. The usual amount of the unsaturated compound is preferably from 0.1 to 10 parts by weight based on 100 parts by weight of the syndiotactic propylene polymer (A).

As described above, the graft amount of the unsaturated compound (B) per the graft modified syndiotactic propylene polymer thus prepared is usually from 1.0 to 7 % by weight, preferably 1.2 to 6 % by weight, more preferably 1.5 to 5 % by weight based on 100 % by weight of the graft modified syndiotactic propylene polymer. It is not preferred the graft amount of the unsaturated compound (B) is over 7% by weight because the properties inherent in the syndiotactic propylene polymer (A) are not exhibited, while it is not preferred the graft amount of the unsaturated compound (B) is lower than 1.0 % by weight because the properties as a graft modified product are not exhibited.

<Graft modified syndiotactic resin composition (D)>

The graft modified syndiotactic propylene polymer-containing resin composition (D) of the present invention comprises the above graft modified syndiotactic propylene polymer (A). Furthermore, the resin composition (D), which is used together with the graft modified syndiotactic propylene polymer (A), may comprise olefin elastomers, polyolefins formed from an $\alpha$-olefin having 2 to 20 carbon atoms, acryl elastomers and styrene elastomers. These resins capable of constituting the resin composition (D), which is used together with the graft modified syndiotactic propylene polymer (A), may be a homo-polymer, a random polymer, a block polymer or a copolymer.

The styrene elastomers are obtainable by linking polystyrene segments and polyolefin segments in a block state, in a random and/or graft state. Examples thereof are styrene/butadiene/styrene type SBS rubber, styrene/butadiene/butylene/styrene type SBBS elastomer, styrene/ethylene/butylene/styrene type SEBS elastomer, styrene/isoprene/styrene type SIS elastomer and styrene/butene type SBR.

The acryl elastomers are elastomers containing acryl units and having a flexural modulus of not higher than 1000 MPa. In the graft modified syndiotactic propylene polymer composition (D), the amount of the graft modified syndiotactic propylene polymer is from 0.001 % by weight to 50 % by weight, preferably 0.05 % by weight to 30 % by weight, more preferably 1 % by weight to 10 % by weight.

The graft modified syndiotactic propylene polymer composition (D) may be optionally blended with additives within not impairing the object of the present invention. Examples of the additives are a weathering stabilizer, a heat stabilizer, an antistatic agent, an anti-slip agent, an anti-blocking agent, a forming agent, a crystallization assistant, an anti-fogging agent, a transparent nucleating agent, a lubricant, a pigment, a dye, a plasticizer, an anti-ageing agent, a hydrochloric acid-absorbing agent, an anti-oxidant, a releasing agent, an impact strength modifier and a UV resisting agent.

In order to further improve the molding properties of the graft modified syndiotactic propylene polymer and the graft modified syndiotactic propylene polymer-containing resin composition (D) according to the present invention, namely, in order to enhance the crystallization rate with increasing the crystallization temperature, a nucleating agent may be contained as a specific component. Examples of the nucleating agent are a dibenzylidene sorbitol nucleating agent, a phosphate salt nucleating agent, a rosin nucleating agent, a metal salt of benzoic acid nucleating agent, polyethylene fluoride, 2,2-methylene bis(4,6-ditert-butylphenyl)sodium phosphate, pimelic acid or salts thereof, and 2, 6-naphthalic dicarboxylate, dicyclohexyl amide. Although the amount of the nucleating agents is not particularly limited, it is preferably about from 0.1 to 1 part by weight per the propylene polymer composition. The timing for blending the nucleating agents is not particularly limited. It is possible to add them during the polymerization, after the polymerization or in the molding processing.

The graft modified syndiotactic propylene polymer-containing resin composition (D) can be prepared by using the above components in the above amounts in known various processes, for example a process of continuously or batch-wise multi-step polymerization in a slurry phase, solution phase or gas phase, a process of mixing with a Henschel mixer, V-blender, ribbon blender or tumbler blender or a process of granulating or pulverizing after mixing and melt-kneading by a mono-axial extruder, twin extruder, kneader or Banbury mixer.

When the resin composition is used as an adhesive resin composition, the content of the graft modified syndiotactic propylene polymer-containing resin composition (D) is usually from 0.001 % by weight to 50 % by weight, preferably 0.5 % by weight to 30 % by weight, more preferably 1 % by weight to 10 % by weight.

The graft modified syndiotactic propylene polymer (A) and the graft modified syndiotactic propylene polymer-containing resin composition (D) can be used for any of adhesions between a polyolefin and a polar resin, between polyolefins, between polar resins, between a polyolefin and a metal, and between metals. Moreover, the adhesive resin composition itself can be laminated on a metal or a polar resin and submitted to use.

The graft modified syndiotactic propylene polymer-containing resin composition (D) of the present invention can be adhered to a metal such as iron, aluminum or the like. Examples of the polar resin capable of being adhered are polar group-containing polymers such as polyamide, polyester, polyacetal, polystyrene, acrylonitrile-butadiene-styrene copolymer (ABS), polymethacrylate, polycarbonate, polyphenylene oxide, polyvinyl chloride, polyvinylidene chloride, polyvinyl acetate, polyvinyl alcohol, completely or partially saponificated products of ethylene-vinyl acetate copolymer, and ethylene-(meth)acrylic acid ester copolymer.
The resin composition (D) has good adhesion with the above resins. Furthermore, the resin composition (D) has excellent adhesion with polyolefins because its main chain structure is a polyolefin. Therefore, the resin composition (D) can be used as an adhesive resin to bonding between the above polar resins, or between the polar resin and a polyolefin.

The graft modified syndiotactic propylene polymer (A) and the graft modified syndiotactic propylene polymer-containing resin composition (D) according to the present invention can be used for a compatibilizing agent. The use of the polar group-containing olefin copolymer according to the present invention can conduct mixing of a polyolefin and a polar group-containing thermoplastic resin in an arbitrary ratio. Since the polar group-containing olefin copolymer of the present invention has a polyolefin main chain and a polar group-having side chain, it can compatibilize components, which are inherently incompatible, and the elongation at break can be remarkably improved as compared with the cases that the polar group-containing olefin copolymer or the thermoplastic resin composition is not used.

The graft modified syndiotactic propylene polymer (A) and the graft modified syndiotactic propylene polymer-containing resin composition (D) can be suitably used for a filler dispersing property-improving agent or an additive for preparing a filler having improved dispersing property.

Examples of the fillers used in the present invention are fibers such as all aromatic polyamide fibers, aliphatic polyamide fiber, polyester fiber, or cellulose fiber; organic fillers such as fine dispersing substances of liquid crystal polyesters or polyamide; and inorganic fillers such as silica, diatomaceous earth, alumina, titanium oxide, magnesium oxide, pumice powder, pumice balloon, aluminum hydroxide, magnesium hydroxide, basic magnesium carbonate, dolomite, calcium sulfate, calcium titanate, barium sulfate, calcium sulfite, talc, clay, mica, asbestos, glass fibers, glass flakes, glass beads, calcium silicate, monmolinite, bentonite, graphite, aluminum powder or molybdenum disulfide. Although the amount of the filler-dispersing agent used is not particularly limited, for example, it is used in an amount of from 0.01 to 100 parts by weight, preferably 0.1 to 20 parts by weight based on 100 parts by weight of the thermoplastic resin.

<Laminate>

In the laminate (E) having at least one layer, which comprises the graft modified syndiotactic propylene polymer-containing resin composition (D) of the present invention as an adhesive resin composition, the thickness of each layer is not particularly limited. The thickness can be regulated in accordance with the kinds of the polymer constituting each layer or the material, the number of the total layers in the laminate, or the use of the laminate. In the laminate that comprises two layers (1) and (3) to be bonded, and an adhesive layer (2) containing the graft modified syndiotactic propylene polymer-containing resin composition used for bonding the two layers, it is generally preferable that the thickness of the layer (1) be 10 $\mu$m to 5 mm, the thickness of the layer (2) be 1$\mu$ m to 1 mm and the thickness of the layer (3) be 10$\mu$m to 5 mm, from the viewpoint of ease of the laminate production and interlaminar adhesion strength.

When the graft modified syndiotactic propylene polymer-containing resin composition is used as the adhesive layer (2), a resin composition containing a polyolefin of an $\alpha$-olefin having 2 to 20 carbon atoms is used for the layer (1). Furthermore, a layer made of at least one selected from polar vinyl plastic, an aromatic vinyl polymer, polyester, polyamide, polycarbonate, engineering plastic, biopolymer, thermoplastic elastomers, natural or artificial fibers and metals is used for the layer (3). In the present invention, the layer (3), which comprises the polar vinyl plastic or the aromatic vinyl polymer, has excellent interlaminar adhesion properties with the layer (2).

Examples of the polar vinyl plastic used in the layer (3) are an acryl polymer, a vinyl chloride polymer, a

vinylidene chloride polymer and an ethylene-vinyl acetate copolymer-saponified product.

The aromatic vinyl polymer used in the layer (3) is a polymer obtainable by polymerizing a monomer containing an aromatic vinyl monomer as a component. Examples of the aromatic vinyl monomer are styrene, $\alpha$-methyl styrene and p-methyl styrene. Examples of the aromatic vinyl polymer may include not only an aromatic vinyl homopolymer but also aromatic vinyl polymers containing various rubber polymers such as butadiene rubber, styrene-butadiene copolymer, ethylene-propylene copolymer or ethylene-propylene-diene copolymer; styrene-maleic anhydride copolymer; styrene-methyl methacrylate copolymer; styrene-acrylonitrile copolymer; styrene-acrylonitrile-butadiene copolymer; and styrene-acrylonitrile-acrylic acid ester copolymer.

The number of all the layers in the laminate of the present invention is not particularly limited. The laminate may have any number of the layers as long as the laminate has at least one part having a structure such that the layer (1), the layer (2) and the layer (3) are laminated in this order. Moreover, the laminate of the present invention may be formed from only three layers of the layer (1), the layer (2) and the layer (3), or may have one, or two or more layers made of materials other than the materials of the layer (1), the layer (2) and the layer (3), together with these three layers.

Examples of the laminate of the present invention are a three-layer structure of the layer (1)/the layer (2)/the layer (3), a four-layer structure of the layer (3)/the layer (1)/ the layer (2)/the layer (3), a five-layer structure of the layer (1)/the layer (2)/the layer (3)/the layer (2)/the layer (1), a five-layer structure of the layer (3)/the layer (2)/the layer (1) /the layer (2)/the layer (3), and a seven-layer structure of the layer (3)/the layer (1)/the layer (2)/the layer (3)/the layer (2)/the layer (1)/the layer (3).

Examples of the process for producing the laminates of the present invention are as follows:

(1) A process for producing the laminate which comprises melt co-extrusion molding a polymer for the layer (1), a polymer for the layer (2) and a polymer for the layer (3) or materials into film-like, sheet-like or plate-like layers, and simultaneously laminating them;

(2) A process for producing the laminate which comprises previously preparing a molded article such as a film, sheet or plate for constituting the layer (1), and/or previously preparing a molded article such as a film, sheet or plate for constituting the layer (3), and while melt extrusion molding the polymer layer (2), together with melt extrusion molding the layer (1) or the layer (3), which is not previously molded, laminating the molded article for the layer (1) and/or the molded article for the layer (3), thereby unifying them;

(3) A process for producing the laminate which comprises previously preparing a molded article such as a film, sheet or plate for constituting the layer (1), and previously preparing a molded article such as a film, sheet or plate for constituting the layer (3), and further previously molding a polymer for the layer (2) into a film or sheet like form, and thereafter inserting the film or sheet for the layer (2) between the molded article for the layer (1) and the molded article for the layer (3), and melting the film or sheet-like layer (2) under heating, thereby bonding and unifying the layers (1) and (3) through the layer (2); and

(4) A process for producing the laminate which comprises using a polymer for the layer (1), a polymer for the layer (2) and a polymer for the layer (3), or materials, injecting the three polymers or the materials with varying the injection timings thereof into a mold, thereby preparing a laminated molded article.

In any of the processes (1) to (4), since the layers (1) and (3) are bonded through the molten layer (2) and the adhesive layer does not contain an organic solvent, an aimed laminate can be obtained without problems and troublesome works, for example, destruction of the environment caused by organic solvents, deterioration of operation circumstances or recovery of solvents. Among the processes, the process (1) of co-extrusion molding is preferred because the number of the operation steps is small, the productivity is high, and the laminate, in which the adhesion strength among the layers (1), (2) and (3) is high and ply separation is not caused, can be obtained.

When the laminate of the present invention is produced in the co-extrusion molding process, three or more extruders are joined to one die in accordance with the layer number of the laminates, plural polymers are laminated and unified inside or outside of the die, and thereby the laminate can be produced. As the die used herein, it is possible to use a T die or an annular die. The shapes and structures of the extruder and die are not particularly limited. The laminates of the present invention can be used for various uses in accordance with the properties of the layers (1), (2) and (3) constituting the laminate. The laminates can be used to, for example, packing materials for foods or medical medicines; packing materials for clothing; packing materials for other products; building materials such as wall papers or decorative sheets; electrically insulating films; base materials for adhesive films or tapes; marking films; agricultural films; convenience goods such as table clothes, rain coats, umbrellas, curtains or covers; laminating materials with metal plates or other materials.

EXAMPLE

The present invention will be described in more detail with reference to the following examples, but it should

not be restricted by the examples. In the examples, various physical properties were measured as follows.

The present invention will be described in more detail with reference to the following examples, but it should not be limited to the examples. In the examples, physical properties were each measured as follows.

Intrinsic viscosity [η]

The intrinsic viscosity is a value measured using a decalin solvent at 135°C. That is, about 20 mg of a polymer powder, pellets or a resin mass is dissolved in 15 ml of decalin and a specific viscosity $\eta_{sp}$ is measured in an oil bath at 135°C. To the decalin solution, 5 ml of the decalin solvent is added and diluted, and then a specific viscosity $\eta_{sp}$ is measured in the same manner. The diluting operation is repeated twice, and when the concentration (C) is extrapolated to 0, the value $\eta_{sp}$ / C is taken as an intrinsic viscosity (referred to the following formula).

$$[\eta] = \lim(\eta_{sp} / C) \quad (C \rightarrow 0)$$

The amount of soluble in n-decane

To 5 g of a sample of a syndiotactic propylene polymer, 200 ml of n-decane was added and dissolved with heating at 145°C for 30 min. The resulting solution was cooled to 20°C over about 3 hrs and allowed to stand for 30 min. Thereafter, a deposit (an insoluble in n-decane) was separated with filtration. The filtrate was put into acetone in an amount about 3 times that of filtrate to deposit a part dissolved in n-decane. The deposit was separated from acetone with filtration, and then dried. When the filtrate was further concentrated and dried, a residue was not confirmed. The soluble in n-decane was determined by the following formula.

Amount of a soluble in n-decane (wt%)

= [Amount of deposits / Amount of a sample] x 100

Melting point (Tm), heat of fusion (ΔH)

Using DSC PYRISI or DSC 7 manufactured by Perkin Elmer Co., about 5 mg of a sample was heated to 200°C in a nitrogen atmosphere (20 ml/min) and kept for 10 min, and then cooled to 30°C at a rate of 10°C/min. After keeping at 30°C for 5 min, the sample was heated to 200°C at a rate of 10°C/min. In the heating, the melting point was determined from the peak point of the crystal melting peak, and the heat of fusion was determined from the integrating value of the peaks.

In the propylene polymer described in the production example of the present invention, when two peaks were observed, the peak at a lower temperature side was taken as $Tm_1$, and the peak at a high temperature side was taken as $Tm_2$. In the best embodiment of the present invention, $Tm_2$ was defined as Tm defined in the requirement [ii].

Isothermal crystallization half time ($t_{1/2}$)

About 5 mg of a sample was packed in a special aluminum pan and the temperature was increased from 30°C to 200°C at a rate of 320°C/min using DSCPYRISI OR DSC7 manufactured by Perkin Elmer Co., and the temperature of 200°C was kept for 5 min. Thereafter, the temperature was decreased from 200°C to the isothermal crystallization temperature of 110°C at a rate of 320°C/min, and the isothermal crystallization half time was obtained from the DSC curve determined by keeping each isothermal crystallization temperature. The crystallization half time ($t_{1/2}$) was determined setting the time of starting the isothermal crystallization process to t=0 (the time at which the temperature reached to the isothermal crystallization temperature from the 200°C) . In the composition of the present invention, the half time $t_{1/2}$ can be determined in the above manner. However, when a composition is not crystallized at an isothermal crystallization temperature, for example, at 110°C, the measurement is expediently carried out at the isothermal crystallization temperature lower than 110°C in some points and from the extrapolated value, the crystallization half time ($t_{1/2}$) is determined.

MFR

The MFR was measured at 230°C under a load of 2.16 Kg in accordance with JIS K-6721.

Process for preparing a press sheet for various measurements

Using a hydraulic hot press set at 200°C manufactured by Shinto Metal Industries Co., a sheet was molded at a pressure of 10 MPa. A sheet having a thickness of 0.5 to 3 mm (spacer shape; four spacers having a size of 80 x 80 x 0.5 to 3 mm on a plate having a size of 240 x 240 x 2 mm) was retained with heat for 5 to 7 min and a pressure was applied on it at 10 MPa for 1 to 2 min. Thereafter, using another hydraulic hot press set at 20°C manufactured by Shinto Metal Industries Co., the sheet was compressed at 10 MPa and cooled for about 5 min to prepare a sample for measurement. A 5 mm thick brass plate was used as the hot plate. The sample prepared in the above process was submitted to evaluation for various physical properties.

Tensile Modulus

A sample for evaluation was prepared by punting out from a 1 mm thick press sheet using an O dumbbell for JIS 3 dumbbell in accordance with JIS K6301. The sample was measured at a span of 30 mm at a tensile rate of 30 mm/min at 23°C.

Internal Haze

The internal haze was measured using a 1 mm thick press sheet by a digital turbidity measuring machine "NDH-20D" manufactured by Nippon Denshoku, and the average value was used in twice measurements.

Graft amount of dicarboxylic anhydride on polypropylene

The graft amount of dicarboxylic anhydride was measured by $^1$H-NMR measurement. The quantification was carried out using JNM GX-500 model NMR measuring apparatus manufactured by Nippon Denshi Co., in the following manner.
0.35 g of a sample was dissolved with heating in 2.0 ml of deuteride 1,1,2,2-tetrachloroethane at 120°C. This solution was fed into an NMR tube having an inner diameter of 10 mm, and $^1$H-NMR measurement was carried out at 120°C. The integrating number was 500 times or more. Using the resulting $^1$H-NMR spectrums, the concentration of the graft groups caused by dicarboxylic anhydride in the graft modified syndiotactic propylene polymer was determined.

Elongation at break

A sample for evaluation was prepared from a 2 mm thick press sheet in accordance with JIS K6301 using an O-dumbbell for JIS 3 dumbbell. The measurement was carried out using a tensile testing machine INSTRON1123 manufactured by Instron Co., at a span of 30 mm at a tensile rate of 30 mm/min at 23°C three times and the average value was used.

Evaluation for Adhesion strength of Laminate

A laminate was cut into a 15 mm wide piece and used as a sample for evaluation. The peeling strength of the interface between a polar resin layer and an adhesive layer of the sample was measured according to a T peeling test. The T peeling test was carried out using a tensile testing machine INSTRON11213 manufactured by Instron Co., at a span of 30 mm at tensile rate of 100 mm/min in a 23°C atmosphere or in a 120°C atmosphere three times. The average value was used.

Production Example 1

<Production of Syndiotactic polypropylene>

To a 3 m$^3$ internal volume reaction vessel thoroughly purged with nitrogen, 1000 liters of n-heptane was introduced and 610 ml (0.93 mol) of a toluene solution (A1 = 1.53 mol/L) of methylaluminoxane was added dropwise at ordinary temperature. To a 5 liters internal volume side-arm flask thoroughly purged with nitrogen, a magnetic stirrer was put. To the flask, 610 ml (0.93 mol) of a toluene solution (Al = 1.53 mol/liter) of methylaluminoxane, and then 1.30

g (1.86 mmol) of a toluene solution of dibenzylmethylene(cyclopentadienyl)(2,7-diphenyl-3,6-ditert-butylfluorenyl) zirconium dichloride were added, and stirred for 20 min. The resulting solution was added to the reaction vessel, and 3200 NL of hydrogen was fed at a rate of 19 $Nm^3/h$ over 10 min. Thereafter, the polymerization was started while feeding 65 Kg/h of propylene. While the hydrogen gas phase concentration in the reaction vessel was kept to 53 mol% and propylene was continuously fed in an amount of 65 Kg/h, the polymerization was carried out at 25°C for 4 hrs. Thereafter, a small amount of diethylene glycol monoisopropylether was added and thereby the polymerization was stopped. The resulting polymer was washed with 1.8 $m^3$ of heptane and dried under reduced pressure at 80°C for 15 hrs to prepare 100 Kg of a polymer. The polymerization activity was 14.0 Kg-PP/mmol-Zr·Hr. The resulting polymer had an intrinsic viscosity [η] of 1.96 dl/g, $Tm_1$ of 152.8°C, $Tm_2$ of 159.3°C, MFR of 1.55 g/10 min, rrrr of 0.950, and an amount of a soluble in n-decane was not higher than the lower limit capable of being measured (0.5wt%). The crystallization half time ($t_{1/2}$) was 138 sec and ΔH was 60 mJ/mg.

Example 1

<Production of Maleic acid-modified Syndiotactic polypropylene>

100 parts by weight of the syndiotactic polypropylene prepared in Production Example 1 was dry blended with a solution prepared by dissolving 1.5 parts by weight of maleic anhydride (abbreviated to MAH, manufactured by Wako Pure Chemical Industries Ltd.), 1. 5 parts by weight of t-butyl peroxy benzoate (Trade Name Perbutyl Z, manufactured by NOF Corporation) in acetone. Thereafter, melt modification was carried out using a twin axial kneader (KZW15, manufactured by Technovel Corporation) at a resin temperature of 180°C, at a screw rotation number of 200 rpm, and at an output rate of 25 g/min. In the extrusion, a radical initiator, a solvent, and unreacted maleic anhydride were deaerated in vacuo. After cooling, an extruded strand in a molten state was pelletized to prepare maleic acid-modified syndiotactic polypropylene (hereinafter abbreviated to MAH-sPP-1) having an rrrr fraction of 0.92, a graft amount of 1.30 % by weight and MFR of 91 g/10 min. The MAH-sPP had an internal Haze of 22.4% and an elongation at break of 43%. The results are shown in Table 1.

Example 2

<Production of Maleic acid-modified Syndiotactic polypropylene>

The procedure of the melt modification of Example 1 was repeated except for using 1.5 parts by weight of maleic anhydride and 1.5 parts by weight of t-butyl peroxy benzoate, and changing the resin temperature to 230°C. After cooling, an extruded strand in a molten state was pelletized to prepare maleic acid-modified syndiotactic polypropylene (hereinafter abbreviated to MAH-sPP-2) having a graft amount of 1.43 % by weight and MFR of 392 g/10 min. The results are shown in Table 1.

Example 3

<Production of Maleic acid-modified Syndiotactic polypropylene>

The procedure of the melt modification of Example 1 was repeated except for using 2.25 parts by weight of maleic anhydride and 2.25 parts by weight of t-butyl peroxy benzoate. After cooling, an extruded strand in a molten state was pelletized to prepare maleic acid-modified syndiotactic polypropylene (hereinafter abbreviated to MAH-sPP-3) having a graft amount of 1.63 % by weight and MFR of 150 g/10 min. The results are shown in Table 1.

Example 4

<Production of Maleic acid-modified Syndiotactic polypropylene>

The procedure of the melt modification of Example 1 was repeated except for using 3. 0 parts by weight of maleic anhydride and 3.0 parts by weight of t-butyl peroxy benzoate. After cooling, an extruded strand in a molten state was pelletized to prepare maleic acid-modified syndiotactic polypropylene (hereinafter abbreviated to MAH-sPP-4) having a graft amount of 1.94 % by weight and MFR of 215 g/10 min. The results are shown in Table 1.

Example 5

<Production of Maleic acid-modified Syndiotactic polypropylene>

The procedure of the melt modification of Example 1 was repeated except for using 4.0 parts by weight of maleic anhydride and 5.0 parts by weight of t-butyl peroxy benzoate. After cooling, an extruded strand in a molten state was pelletized to prepare maleic acid-modified syndiotactic polypropylene (hereinafter abbreviated to MAH-sPP-5) having an rrrr fraction of 0.91, a graft amount of 2.97 % by weight and MFR of 302 g/10 min. The results are shown in Table 1.

Example 6

<Production of Maleic acid-modified Syndiotactic polypropylene>

The procedure of the melt modification of Example 1 was repeated except for using 5.0 parts by weight of maleic anhydride and 6.0 parts by weight of t-butyl peroxy benzoate. After cooling, an extruded strand in a molten state was pelletized to prepare maleic acid-modified syndiotactic polypropylene (hereinafter abbreviated to MAH-sPP-6) having an rrrr fraction of 0.91, a graft amount of 4.88 % by weight and MFR of 473 g/10 min. The results are shown in Table 1.

Comparative Example 1

<Production of Maleic acid-modified Syndiotactic polypropylene>

The procedure of the melt modification of Example 1 was repeated except for using 0. 75 part by weight of maleic anhydride and 0.75 part by weight of t-butyl peroxy benzoate. After cooling, an extruded strand in a molten state was pelletized to prepare maleic acid-modified syndiotactic polypropylene (hereinafter abbreviated to MAH-sPP-7) having a graft amount of 0.63 % by weight and MFR of 38 g/10 min. The results are shown in Table 1.

Comparative Example 2

<Production of Maleic acid-modified Syndiotactic polypropylene>

The procedure of the melt modification of Example 1 was repeated except for using 6. 0 parts by weight of maleic anhydride and 6.0 parts by weight of t-butyl peroxy benzoate. Although the resulting extruded molten substance was not made into a strand nor pelletized, maleic acid-modified syndiotactic polypropylene (hereinafter abbreviated to MAH-sPP-8) having a graft amount of 3.20 % by weight and MFR of 1000 g/10 min was prepared. The results are shown in Table 1.

Comparative Example 3

<Production of Maleic acid-modified Syndiotactic polypropylene>

The syndiotactic polypropylene in an amount of 140 g prepared in Production Example 1 was dissolved in 1.4 liters of monochlorobenzene at 120°C. To the solution, a solution prepared by dissolving 20 g of maleic anhydride (abbreviated to MAH manufactured by Wako Pure Chemical Industries Ltd.) in 100 ml of monochlorobenzene and 40 ml of acetone, and 14 g of a dicumylperoxide dissolved in 100 ml of monochlorobenzene were added in a nitrogen atmosphere over 4 hrs. After the addition, the solution was stirred with heating at 120°C for 3 hrs.
Thereafter, the solution was cooled to 30°C, and a polymer powder was separated by adding 1.5 liters of acetone and filtrating.
The resulting powder, further, was washed with 1.5 liters of acetone and thereby 142 g of maleic acid-modified syndiotactic polypropylene (hereinafter abbreviated to MAH-sPP-9) having a graft amount of 3. 6 % by weight and MFR of 22 g/10 min was prepared. The results are shown in Table 1.

Comparative Example 4

<Production of Maleic acid-modified Syndiotactic polypropylene>

The procedure of the solution modification of Comparative Example 3 was repeated except for using syndiotactic polypropylene (rrrr=0.755, [η]=1.59, Tm=126.8°C, MFR=3.9 g/10min), 10 g of maleic anhydride and 7 g of dicumylperoxide, and thereby 121 g of maleic acid-modified syndiotactic polypropylene (hereinafter abbreviated to MAH-sPP-10) having a graft amount of 1.3 % by weight and MFR of 28 g/10 min was prepared. The results are shown in Table 1.

Comparative Example 5

<Production of Maleic acid-modified Isotactic polypropylene>

The procedure of the solution modification of Example 3 was repeated except for using isotactic polypropylene (mmmm=0. 929, [η]=2.66, Tm=163. 4 °C, MFR=1.99 g/10min) manufactured by Prime Polymer Co., Ltd. Although the resulting extruded molten substance was not made into a strand nor pelletized, maleic acid-modified isotactic polypropylene (hereinafter abbreviated to MAH-iPP-1) having a graft amount of 1.01 % by weight and MFR of 1000 g/10 min or more was prepared. The results are shown in Table 1.
In the comparison with Example 3, maleic acid-modified isotactic polypropylene has a high MFR and is unsuitable for melt kneading so that it has low productivity.

Comparative Example 6

<Production of Maleic acid-modified Isotactic polypropylene>

The procedure of the melt modification of Comparative Example 4 was repeated except for using isotactic polypropylene (mmmm=0.929, [η]=2.66, Tm=163.4°C, MFR=1.99 g/10min) manufactured by Prime Polymer Co., Ltd. Although the resulting extruded molten substance was not made into a strand nor pelletized, maleic acid-modified isotactic polypropylene (hereinafter abbreviated to MAH-iPP-2) having a graft amount of 1.52 % by weight and MFR of 1000 g/10 min or more was prepared. The results are shown in Table 1.
In the comparison with Example 4, maleic acid-modified isotactic polypropylene has a high MFR and is unsuitable for melt kneading so that it has low productivity.

Example 7

<Production of Adhesive>

MAH-sPP-1 in an amount of 5 parts by weight, 25 parts by weight of a commercially available propylene-ethylene copolymer manufactured by Mitsui Chemicals Co., and a commercially available random polypropylene manufactured by Prime Polymer Co., Ltd. were extruded using a twin screw kneading machine (KZW15 manufactured by Technovel Corporation) at a resin temperature of 200°C, at a screw rotation number of 200 rpm, and at an output of 40g/min, to prepare a resin composition for adhesion. After pre-heated the pellets, which are prepared by the above kneading machine, at 200°C for 5 min by using a press-molding machine, the pellets were molded under a pressure of 100 $Kg/cm^2$ for 2 min and then cooled at 20°C under a pressure of 100 $Kg/cm^2$ for 5 min and thereby an adhesive layer having a thickness of 100 μm was prepared.

<Laminate resin layer>

As a polar resin layer, a commercially available Eval, which is manufactured by Kuraray Co. and is a standard product name, (hereinafter abbreviated to EVOH) was formed into a film having a thickness of 100 μm and used.

<Matrix resin layer>

As a matrix resin layer, a random polypropylene having a thickness of 100 μm was used.

<Production of Laminate>

A random polypropylene film was used as a matrix resin layer (100 μm), an adhesive film (100 μm) was superimposed on it, and further the EVOH film was superimposed on them and press bonded to prepare a laminate. The resulting laminate had a structure such that random polyproplyene, adhesive and EVOH films are laminated in this order and fusion bonded by pressing with a 20 mm wide heat seal bar (220°C) at a pressure of 2 $Kg/cm^2$ on the EVOH side for 2 min.

<Evaluation for Adhesion of Laminate>

The prepared laminate as described above was cut into a 15 mm width and the adhesion was measured on the interface between the polar resin layer and the adhesive layer using a tensile testing machine in a 23°C atmosphere or in a 120°C atmosphere in the T peeling test. The results are shown in Table 2.

Example 8

The procedure of Example 7 was repeated except for using MAH-sPP-2 and thereby the adhesion on the interface between the polar resin and the adhesive layer of the laminate was measured.

The results are shown in Table 2.

Example 9

The procedure of Example 7 was repeated except for using MAH-sPP-3 and thereby the adhesion on the interface between the polar resin and the adhesive layer of the laminate was measured. The results are shown in Table 2.

Example 10

The procedure of Example 7 was repeated except for using MAH-sPP-4 and thereby the adhesion on the interface between the polar resin and the adhesive layer of the laminate was measured. The results are shown in Table 2.

Example 11

The procedure of Example 7 was repeated except for using MAH-sPP-5 and thereby the adhesion on the interface between the polar resin and the adhesive layer of the laminate was measured. The results are shown in Table 2.

Example 12

The procedure of Example 7 was repeated except for using MAH-sPP-6 and thereby the adhesion on the interface between the polar resin and the adhesive layer of the laminate was measured. The results are shown in Table 2.

Comparative Example 7

The procedure of Example 7 was repeated except for using MAH-sPP-7 and thereby the adhesion on the interface between the polar resin and the adhesive layer of the laminate was measured. The results are shown in Table 2. Since the graft modifying syndiotactic propylene polymer used in Comparative Example 7 has a low graft amount, the peeling strength is remarkably lower as compared with that in Example 7.

Comparative Example 8

The procedure of Example 7 was repeated except for using MAH-sPP-8 and thereby the adhesion on the interface between the polar resin and the adhesive layer of the laminate was measured. The results are shown in Table 2. Since the graft modified syndiotactic propylene polymer used in Comparative Example 8 has high fluidity and low strength, the peeling strength is remarkably lower as compared with that in Example 11, in which the graft modified syndiotactic propylene polymer having the same graft amount as MAH-sPP-8 was used.

Comparative Example 9

The procedure of Example 7 was repeated except for using MAH-sPP-9 and thereby the adhesion on the interface between the polar resin and the adhesive layer of the laminate was measured. The results are shown in Table 2. Since the graft modified syndiotactic propylene polymer used in Comparative Example 9 has low flowability and moving thereof to the adhesion interface is insufficient, the peeling strength is remarkably lower as compared with that in Example 7, in which the graft modified syndiotactic propylene polymer having the same graft amount as MAH-sPP-9 was used.

Comparative Example 10

The procedure of Example 7 was repeated except for using MAH-sPP-10 and thereby the adhesion on the interface between the polar resin and the adhesive layer of the laminate was measured. The results are shown in Table 2. Since the graft modified syndiotactic propylene polymer used in Comparative Example 10 has low flowability and moving thereof to the adhesion interface is insufficient, and further has a low rrrr fraction and inferior heat resistance, the peeling strength is remarkably lower as compared with that in Example 7 in which the graft modified syndiotactic propylene polymer having the same graft amount as MAH-sPP-10 was used. Particularly, the peeling strength in a 120°C atmosphere is remarkably low.

Table 1-1

| | Product to be modified | Radical initiator | | MAH | Temperature (°C) |
|---|---|---|---|---|---|
| | | Kind Note 1) | Amount (wt%) | Amount (wt%) | |
| Example 1 | sPP(rrrr=0.950) | A | 1.50 | 1.50 | 180 |
| Example 2 | sPP(rrrr=0.950) | A | 1.50 | 1.50 | 220 |
| Example 3 | sPP(rrrr=0.950) | A | 2.25 | 2.25 | 180 |
| Example 4 | sPP(rrrr=0.950) | A | 3.00 | 3.00 | 180 |
| Example 5 | sPP(rrrr=0.950) | A | 4.00 | 5.00 | 180 |
| Example 6 | sPP(rrrr=0.950) | A | 5.00 | 6.00 | 180 |
| Comparative Example 1 | sPP(rrrr=0.950) | A | 0.75 | 0.75 | 180 |
| Comparative Example 2 | sPP(rrrr=0.950) | A | 5.00 | 6.00 | 220 |
| Comparative Example 3 | sPP(rrrr=0.950) | B | 3.00 | 5.00 | 180 |
| Comparative Example 4 | sPP(rrrr=0.755) | B | 3.00 | 5.00 | 180 |
| Comparative Example 5 | iPP (mmmm=0.929) | A | 2.25 | 2.25 | 180 |
| Comparative Example 6 | iPP (mmmm=0.929) | A | 3.00 | 3.00 | 180 |
| Note 1) A: t-butylperoxy benzoate, B: dicumylperoxide | | | | | |

Table 1-2

| | Graft modified product | | | |
|---|---|---|---|---|
| | Abbreviation | Graft amount (wt%) | MFR Note 2) (g/10 min) | Pelletizing |
| Example 1 | MAH-sPP-1 | 1.30 | 91 | Good |
| Example 2 | MAH-sPP-2 | 1.43 | 392 | Good |
| Example 3 | MAH-sPP-3 | 1.63 | 150 | Good |
| Example 4 | MAH-sPP-4 | 1.94 | 215 | Good |
| Example 5 | MAH-sPP-5 | 2.97 | 302 | Good |
| Example 6 | MAH-sPP-6 | 4.88 | 473 | Good |
| Comparative Example 1 | MAH-sPP-7 | 0.63 | 38 | Good |
| Comparative Example 2 | MAH-sPP-8 | 3.20 | 1000 or more | Failure |

(continued)

| | Graft modified product | | | |
|---|---|---|---|---|
| | Abbreviation | Graft amount (wt%) | MFR Note 2) (g/10 min) | Pelletizing |
| Comparative Example 3 | MAH-sPP-9 | 1.34 | 22 | - |
| Comparative Example 4 | MAH-sPP-10 | 1.30 | 28 | - |
| Comparative Example 5 | MAH-iPP-1 | 1.01 | 1000 or more | Failure |
| Comparative Example 6 | MAH-iPP-2 | 1.52 | 1000 or more | Failure |
| Note 2) A value measured at 230°C under a load of 2.16 Kg | | | | |

Table 2

| Example/ Comparative Example | Graft modified polymer (Abbreviation) | Peeling strength | |
|---|---|---|---|
| | | 23°C (N/15 mm) | 120°C (N/15 mm) |
| Example 7 | MAH-sPP-1 | 17.2 | 10.3 |
| Example 8 | MAH-sPP-2 | 24.3 | 14.8 |
| Example 9 | MAH-sPP-3 | 21.9 | 14.2 |
| Example 10 | MAH-sPP-4 | 27.6 | 19.3 |
| Example 11 | MAH-sPP-5 | 30.5 | 22.6 |
| Example 12 | MAH-sPP-6 | 36.1 | 27.1 |
| Comparative Example 7 | MAH-sPP-7 | 8.1 | 4.1 |
| Comparative Example 8 | MAH-sPP-8 | 14.3 | 8.6 |
| Comparative Example 9 | MAH-sPP-9 | 8.9 | 5.3 |
| Comparative Example 10 | MAH-sPP-10 | 7.7 | 3.1 |

Possibility for Industrial use

The graft modified syndiotactic propylene polymer (A) of the present invention has excellent thermal stability and has a high graft efficiency in not only a solution method but also a melt method. The resin composition (D) containing the graft modified syndiotactic propylene polymer (A) of the present invention has excellent adhesion with a polar resin even in a high temperature atmosphere. The use of the resin composition (D) can prepare molded articles having excellent interlaminar adhesion in a high temperature atmosphere.

## Claims

**1.** A graft-modified syndiotactic propylene polymer satisfying the following properties [1] to [3].

[1] the melt flow rate (MFR), as measured at 230°C under a load of 2.16 Kg, is from 30 to 1000 g/10 min.,
[2] the concentration of graft group caused from a radical polymerization unsaturated compound, as measured in $^1$H-NMR, is from 0.7 to 7.0 % by weight, and
[3] the syndiotactic pentad fraction, as measured in $^{13}$C-NMR is not less than 0.80.

**2.** The graft-modified syndiotactic propylene polymer according to claim 1, which polymer is obtainable by allowing a syndiotactic propylene polymer (A) having a syndiotactic pentad fraction of not less than 0.85 to thermally contact with a radical polymerizing unsaturated compound (B) at a temperature higher than the decomposing temperature of a radical initiator (C).

3. The graft-modified syndiotactic propylene polymer according to claim 2 wherein the radical polymerizing unsaturated compound (B) is at least one selected from unsaturated dicarboxylic acids and their derivatives.

4. The graft-modified syndiotactic propylene polymer according to claim 2 or 3 wherein the thermal contact is carried out by melt kneading.

5. A graft-modified syndiotactic propylene polymer-containing resin composition (D), which comprises 0.001 to 50 % by weight of the graft-modified syndiotactic propylene polymer (A) as claimed in any one of claims 1 to 4.

6. A laminate (E) comprising at least one layer of the graft-modified syndiotactic propylene polymer-containing resin composition (D) as an adhesive resin composition.

**INTERNATIONAL SEARCH REPORT**

International application No.
PCT/JP2007/072225

A. CLASSIFICATION OF SUBJECT MATTER
*C08F8/46*(2006.01)i, *B32B27/32*(2006.01)i, *C08L23/26*(2006.01)i

According to International Patent Classification (IPC) or to both national classification and IPC

B. FIELDS SEARCHED

Minimum documentation searched (classification system followed by classification symbols)
C08F8/00-8/50, B32B27/32, C08L23/26, C08F255/00-255/10, C09J9/00-201/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 4-348114 A (Mitsui Toatsu Chemicals, Inc.), 03 December, 1992 (03.12.92), Claims 1 to 4; Par. Nos. [0020] to [0033], [0036] to [0040], [0064] to [0066], [0070] & US 5326824 A1 & EP 457291 A2 & KR 9400277 B | 1-6 |
| X | JP 9-78046 A (Akira KISHIMOTO), 25 March, 1997 (25.03.97), Claims 1 to 6; Par. Nos. [0021], [0027] to [0028]; table 2 (Family: none) | 1-6 |
| A | JP 9-187894 A (Dainippon Printing Co., Ltd.), 22 July, 1997 (22.07.97), Claim 1; Par. No. [0026] (Family: none) | 1-6 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>01 February, 2008 (01.02.08) | Date of mailing of the international search report<br>12 February, 2008 (12.02.08) |
| Name and mailing address of the ISA/<br>Japanese Patent Office<br>Facsimile No. | Authorized officer<br><br>Telephone No. |

Form PCT/ISA/210 (second sheet) (April 2007)

INTERNATIONAL SEARCH REPORT

International application No.
PCT/JP2007/072225

C (Continuation). DOCUMENTS CONSIDERED TO BE RELEVANT

| Category* | Citation of document, with indication, where appropriate, of the relevant passages | Relevant to claim No. |
|---|---|---|
| A | JP 2004-501250 A (Atofina),<br>15 January, 2004 (15.01.04),<br>Claims 1 to 11; table 1<br>& US 2004/14897 A1 & EP 1299437 A1<br>& WO 01/98386 A1 & AU 6766201 A<br>& BR 111887 A & CA 2413135 A<br>& CN 1447824 A | 1-6 |
| A | JP 2006-193719 A (Exxonmobil Chemical Patents Inc.),<br>27 July, 2006 (27.07.06),<br>Claims 1, 4, 31, 46; tables 1 to 10<br>& US 2006/20067 A1 & GB 2420348 A<br>& DE 102005050378 A & FR 2877347 A | 1-6 |
| A | JP 2003-238619 A (Tonen Chemical Corp., Origin Electric Co., Ltd.),<br>27 August, 2003 (27.08.03),<br>Claims 1, 2; Par. Nos. [0038], [0062]; tables 1, 2<br>(Family: none) | 1-6 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H6199425364 A
- JP 2003238619 A
- JP 2004501250 A
- JP 3025553 B
- WO 200127124 A
- WO 2004087775 A
- US 4960878 A
- JP H11989501950 A
- US 5321106 A


### Non-patent literature cited in the description


- *J. Am. Chem. Soc.,* 1988, vol. 110, 6255-6256